# FASCICULE DE BREVET EUROPEEN

(11) **EP 1 011 863 B1**
(45) Date de publication et mention de la délivrance du brevet: **20.02.2002**
(21) Numéro de dépôt: 98942816.4
(22) Date de dépôt: 03.09.1998
(51) Int. Cl.: B01L 3/02, G01N 35/10

(54) **PORTOIR POUR CONES DE PIPETTE MULTICANAUX**
BEHÄLTER FÜR MEHRKANAL-PIPETTENSPITZEN
RACK FOR MULTICHANNEL PIPETTE CONES

(30) Priorité: 08.09.1997 FR 9711132
(43) Date de publication de la demande: 28.06.2000
(73) Titulaire: Gilson S.A., 95400 Villiers-le-Bel (FR)
(72) Inventeur: VECCHIO, Jocelyn, F-94400 Vitry sur Seine (FR)
(74) Mandataire: Ahner, Francis
(86) Numéro de dépôt international: FR9801885
(87) Numéro de publication internationale: WO9912646

(56) Documents cités:
- DE-A- 2 729 520
- DE-A- 19 542 921
- US-A- 5 307 933
- US-A- 5 392 914

## Description

L'invention concerne les portoirs pour cônes de pipettes, notamment de pipettes multicanaux. Le document DE-A-19 542 921 décrit un portoir, qui comprend une rangée d'orifices accessible à travers une ouverture dans un revêtement cylindrique, la direction de la rangée accessible étant parallèle à la direction longitudinale du cylindre.

On connaît, par exemple du document US-3 494 210, des portoirs ou «racks» présentant une face d'appui plane dans laquelle sont ménagés des orifices disposés suivant une matrice rectangulaire. Un portoir de ce type peut recevoir des cônes dans les orifices, un épaulement des cônes étant par exemple en appui sur la face d'appui. Le portoir permet de fixer plusieurs cônes à une rangée d'embouts d'une pipette multicanaux. L'écartement des embouts correspondant à celui des cônes reçus sur le portoir, on dispose la pipette de sorte que tous les embouts pénètrent dans des cônes d'une rangée d'orifices du portoir. L'utilisateur presse alors la pipette contre le portoir afin de retenir par friction les cônes sur les embouts. Puis il éloigne la pipette avec les cônes retenus sur les embouts. Toutefois, en général, cette utilisation ne donne pas satisfaction. En effet, lorsque l'utilisateur presse la pipette sur le portoir, il se produit une flèche concave sur le portoir au milieu de la rangée d'orifices recevant les cônes. Dès lors, ou bien l'effort de l'utilisateur est trop modéré de sorte que, lorsque l'utilisateur éloigne la pipette, il apparaît que certains embouts ne portent aucun cône, notamment les embouts du milieu de la rangée ; ou bien l'effort de l'utilisateur est important de sorte que, même s'il parvient à retenir un cône sur chaque embout, il doit ultérieurement à nouveau fournir un effort important pour séparer cônes et embouts, notamment pour les embouts des extrémités de la rangée.

De plus, les cônes, le portoir et les embouts ont par nature des défauts géométriques, limités dans une certaine mesure par des tolérances de fabrication. Or, cela pose problème lorsque ces défauts s'accumulent dans un sens pour un embout et le cône associé, et dans un autre sens pour un autre embout et le cône associé. C'est le cas pour une pipette possédant un premier embout ayant une largeur extérieure correspondant à la tolérance maximale et recevant un premier cône ayant un diamètre intérieur correspondant à la tolérance minimale, et un deuxième embout de configuration opposée, à savoir ayant une largeur extérieure correspondant à la tolérance minimale et recevant un deuxième cône ayant un diamètre intérieur correspondant à la tolérance maximale. Dans ces conditions, avec le portoir précité, et même sans l'apparition d'une flèche concave significative, le premier cône sera monté serré sur le premier embout bien avant que le deuxième cône soit monté serré sur le deuxième embout. Les faces de contact mutuel des cônes et embouts étant coniques, cela se traduit par une différence d'altitude des zones de friction entre les cônes et les embouts sur le premier embout et le deuxième embout. Cela est encore accru par les défauts géométriques relatifs au contact des cônes sur la face d'appui. Dans ces conditions, plus les défauts géométriques des cônes, des embouts et du portoir sont importants, plus il est difficile de charger efficacement tous les embouts d'une même pipette.

Un but de l'invention est de pallier ces inconvénients et de fournir un portoir permettant de fixer efficacement des cônes sur tous les embouts d'une pipette au moyen d'un effort modéré de l'utilisateur.

En vue de la réalisation de ce but, on prévoit selon l'invention un portoir pour cônes de pipette, notamment de pipette multicanaux, le portoir présentant des orifices alignés en formant au moins une rangée suivant au moins une direction d'alignement, et une face d'appui adaptée à supporter des cônes reçus dans les orifices, le portoir rendant simultanément accessibles des cônes de la rangée, la face d'appui ayant un profil transversal suivant la direction d'alignement de forme générale convexe.

Ainsi, la forme convexe évite l'apparition d'une flèche concave lors de la fixation des cônes sur les embouts. On assure donc une bonne fixation des cônes sur tous les embouts de la pipette, notamment pour les embouts du centre de la rangée. Cette fixation peut être obtenue au moyen d'un effort modéré de l'utilisateur. Ensuite, l'effort à fournir pour séparer les cônes et les embouts sera également modéré. De plus, le portoir selon l'invention évite d'avoir à fabriquer le portoir, les embouts et les cônes avec des tolérances dimensionnelles très étroites. En outre, il n'est pas nécessaire de munir le portoir de nervures de renfort. Sa fabrication, notamment par moulage, est donc rapide et peu onéreuse. De plus, ce portoir rend possible de charger chaque cône sur l'embout respectif avec facilité et sans serrage excessif sans être gêné par les défauts géométriques et dimensionnels des cônes, des embouts et du portoir. Pour cela, il suffit par exemple d'employer le procédé selon l'invention pour fixer les cônes aux embouts au moyen d'un basculement, comme énoncé ci-après.

La forme pourra ne pas être convexe au sens strict, par exemple en étant globalement convexe et localement concave. Par exemple, le profil pourra avoir une forme en "M" ou "en dos de chameau". Ainsi, le profil pourra présenter au moins une zone en saillie vers le haut. Le profil pourra avoir au moins une zone médiane, de préférence au centre, s'étendant plus haut que deux extrémités terminales du profil. Dans certains cas, la forme pourra être strictement convexe.

Avantageusement, les orifices sont alignés suivant deux directions d'alignement non parallèles entre elles, la face d'appui ayant des profils transversaux suivant les deux directions d'alignement de forme convexe.

Ainsi, en fonction du nombre d'embouts de la pipette, le portoir peut être utilisé avec une rangée d'orifices dans l'une ou l'autre des deux directions d'alignement avec les mêmes avantages précités.

Avantageusement, les orifices sont alignés en formant au moins deux rangées suivant deux directions d'alignement respectives non parallèles entre elles, le portoir rendant simultanément accessibles des cônes de chaque rangée.

Avantageusement, le profil ou au moins un des profils a une forme arrondie.

Avantageusement, le profil ou au moins un des profils a une forme en arc de cercle.

Cette forme est particulièrement efficace pour assurer une bonne répartition des efforts sur les embouts pour la fixation par friction de chaque cône.

Avantageusement, la face d'appui a une forme sphérique.

Avantageusement, le profil ou au moins un des profils a une forme triangulaire.

Avantageusement, le portoir est constitué de plusieurs parties sensiblement immobiles les unes par rapport aux autres.

Avantageusement, le portoir est d'un seul tenant.

Avantageusement, le portoir comporte une paroi d'appui définissant la face d'appui, et des moyens de support reliés directement à la paroi d'appui et aptes à la supporter en reposant sur une base.

Avantageusement, le portoir a une forme générale de parallélépipède rectangle.

On prévoit également selon l'invention un procédé de fixation de cônes sur des embouts d'une pipette multicanaux, le procédé comprenant, à partir d'une pipette comportant au moins un premier et un deuxième embouts, et d'un portoir selon l'invention recevant au moins un premier et un deuxième cônes dans les orifices, les étapes de :
- disposer la pipette par rapport au portoir de sorte que le profil et des axes des embouts s'étendent dans un plan commun, le premier embout pénétrant dans le premier cône afin de retenir le premier cône sur le premier embout, et le deuxième embout s'étendant en regard et à distance du deuxième cône; et
- basculer la pipette en conservant le profil et les axes des embouts dans le plan commun de sorte que le premier cône retenu sur le premier embout s'étend à distance de la face d'appui, et de sorte que le deuxième embout pénètre dans le deuxième cône afin de retenir le deuxième cône sur le deuxième embout.

Ce procédé permet de bénéficier dans une très large mesure des avantages du portoir selon l'invention. Contrairement au procédé connu dans lequel on presse la pipette contre le portoir pour assurer la fixation des cônes simultanément sur tous les embouts, le procédé selon l'invention permet de fixer successivement les cônes sur chaque embout, embout après embout le long de la rangée de cônes. L'utilisateur peut donc fournir un effort très modéré suffisant à la mise en place individuelle de chaque cône et assurant néanmoins une très bonne retenue par friction du cône sur l'embout.

On prévoit encore selon l'invention un procédé de fixation de cônes sur des embouts d'une pipette multicanaux, dans lequel, à partir d'une pipette comportant au moins deux embouts, et d'un portoir selon l'invention recevant au moins deux cônes dans les orifices, il comprend les étapes de :
- disposer la pipette par rapport au portoir de sorte que le profil et des axes des embouts s'étendent dans un plan commun, les embouts pénétrant dans les cônes respectifs ; et
- solliciter la pipette en direction du portoir parallèlement aux axes des embouts afin de retenir simultanément les cônes sur les embouts respectifs.

Ainsi, dans ce cas, l'effort de l'utilisateur déforme élastiquement la face d'appui en réduisant sa forme convexe pour fixer efficacement tous les cônes aux embouts.

D'autres caractéristiques et avantages de l'invention apparaîtront encore dans la description suivante d'un mode préféré de réalisation donné à titre d'exemple non limitatif. Aux dessins annexés :
- la figure 1 est une vue en plan d'un portoir selon un mode préféré de réalisation de l'invention ;
- les figures 2 et 3 sont des vues en coupe transversales du portoir de la figure 1 respectivement selon les lignes II-II et III-III ; et
- les figures 4 et 5 sont deux vues schématiques partielles du portoir et d'une pipette illustrant la mise en oeuvre du procédé de l'invention.

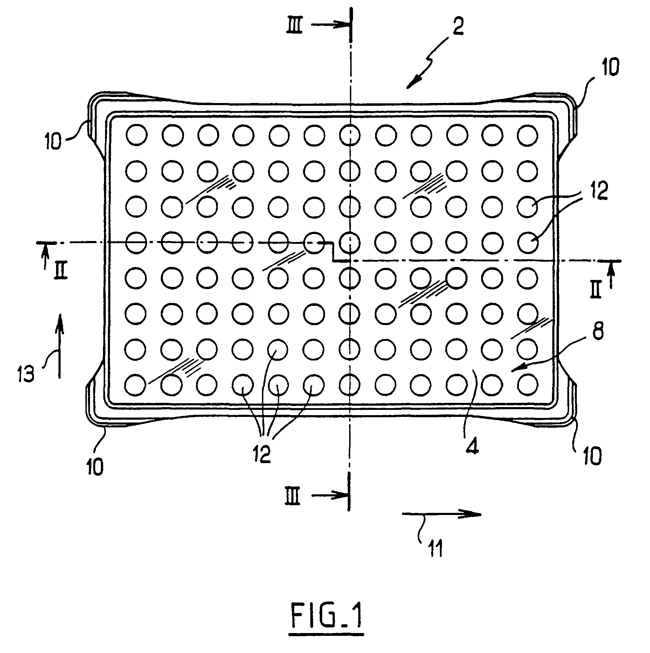

En référence aux figures 1 à 3, le portoir 2 comporte un support 4 de forme générale plane, rectangulaire en plan, ayant une face inférieure 6 et une face supérieure 8. Le portoir comporte quatre pieds 10 solidaires du support 4, s'étendant du côté de la face inférieure 6 du support à partir de quatre coins du rectangle, et adaptés à supporter le portoir sur un plan horizontal.

Le support 4 présente des orifices 12 traversant une épaisseur du support depuis la face supérieure 8 jusqu'à la face inférieure 6. Les orifices 12 sont disposés en une matrice rectangulaire et donc alignés en plusieurs rangées suivant deux directions d'alignement, à savoir une direction longitudinale 11 et une direction latérale 13, qui sont ici perpendiculaires entre elles. En l'espèce, la matrice comporte huit orifices 12 par rangée en largeur, et douze orifices 12 par rangée en longueur. Chaque orifice 12 comprend un tronçon supérieur étroit contigu à la face supérieure 8 et un tronçon inférieur large faisant suite au tronçon étroit et contigu à la face inférieure 6.

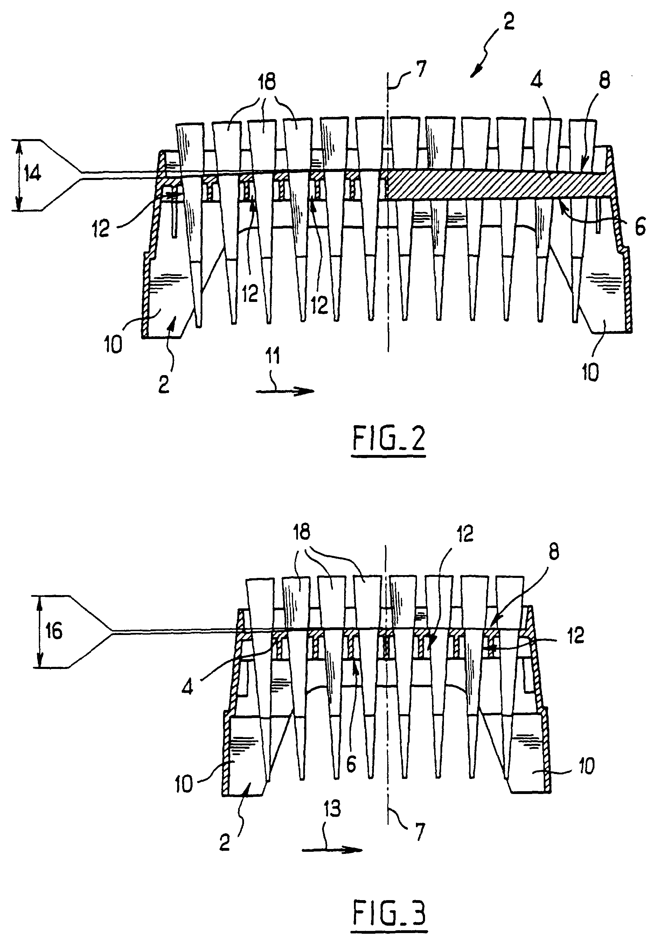

La face inférieure 6 du portoir est, en l'espèce, plane. La face supérieure 8 est de forme sphérique, le centre géométrique de la sphère se trouvant du côté du support 4 et des pieds 10. Ainsi, en référence à la figure 2, la face supérieure 8 présente un profil transversal, suivant la direction longitudinale 11, de forme convexe au niveau de chaque rangée longitudinale d'orifices 12. La forme du profil est arrondie et bombée en arc de cercle en présentant une légère flèche 14. De même, cette face 8 présente un profil transversal, suivant la direction latérale 13, de forme similaire pour chaque rangée latérale d'orifices 12 avec une flèche 16, comme le montre la figure 3. Par exemple, la sphère pourra avoir un rayon égal à 1 m, le diamètre de chaque orifice 12 au niveau de la face supérieure 4 étant d'environ 5 mm et la distance minimum entre deux orifices 12 de chaque rangée étant de 4 mm. Les flèches 14 et 16 sont par exemple de 1 à 2 mm au centre du support. Le support présente un axe de symétrie vertical passant par le centre du rectangle.

Le portoir 2 est adapté à supporter des cônes 18 pour des embouts de pipette, les cônes étant reçus dans les orifices 12 respectifs. Les cônes 18 sont appelés ainsi en raison de leur forme générale en cône et surtout de la forme conique de leur extrémité la plus étroite. En toute rigueur, il n'ont cependant pas exactement une forme en cône. Ils présentent notamment sur leur face externe un épaulement circulaire plus large que le tronçon supérieur étroit des orifices 12. Ainsi, un cône 18 reçu dans un orifice 12 est en appui par son épaulement contre la face supérieure 8 du support et repose par gravité sur cette face. Les pieds 10 sont agencés de sorte que lorsqu'ils reposent sur un plan d'appui, l'extrémité étroite des cônes 18, du côté de la face inférieure 6, s'étend à distance du plan d'appui.

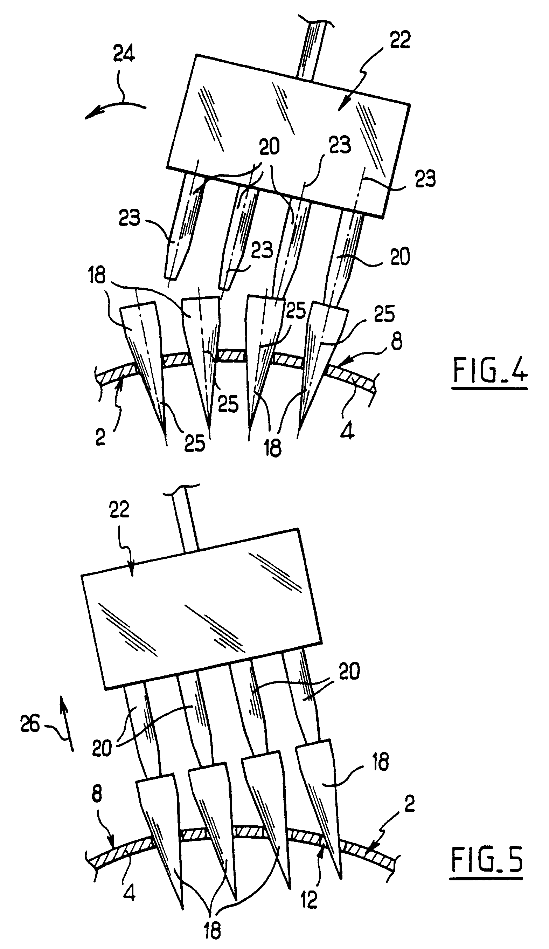

Les cônes 18 sont adaptés à être fixés à des embouts 20 d'une pipette multicanaux 22 comme celle représentée schématiquement aux figures 4 et 5. Une telle pipette 22 comporte par exemple huit embouts 20 d'axes parallèles entre eux et coplanaires, les embouts étant disposés en une rangée avec leurs extrémités libres alignées entre elles. Pour la clarté de la représentation, une pipette 22 ayant seulement quatre embouts 20 a été représentée aux figures 4 et 5, le portoir des figures 1 à 3 étant cependant bien adapté à une pipette à huit ou douze embouts par exemple. De même, pour la clarté de la représentation, le rayon de la sphère de la face supérieure 8 a été réduit sur les figures 4 et 5.

Les cônes 18 sont adaptés à être retenus par friction aux extrémités libres des embouts 20 respectifs pour que du liquide soit ensuite aspiré dans les cônes, puis expulsé, au moyen de la pipette.

Pour fixer les cônes 18 aux embouts 20, on peut utiliser le procédé selon l'invention, en référence aux figures 4 et 5. On considérera par exemple qu'on utilise une pipette 22 à huit embouts 20 (dont quatre seulement sont représentés).

On suppose que l'une quelconque des rangées latérales de huit orifices 12 du portoir reçoit des cônes 18. On dispose la pipette 22 par rapport au portoir 2 de sorte que le premier embout 20 situé à une extrémité de la rangée pénètre suffisamment dans le premier cône 18 situé à l'extrémité de la rangée de cônes pour retenir ce cône en friction sur l'embout. De plus, tous les autres embouts 20 s'étendent en regard des autres cônes 18 respectifs et éventuellement partiellement dans ceux-ci. Le dernier embout 20 à l'autre extrémité de la rangée d'embouts s'étend à distance du cône 18 correspondant. Les orifices 12 et les embouts 20 ont des axes respectifs 25 et 23. Le profil de la face 8 et ces axes 23, 25 s'étendent dans un plan vertical commun parallèle à la direction latérale 13.

On bascule ensuite la pipette 22 comme indiqué par la flèche 24 autour d'un axe horizontal virtuel perpendiculaire au plan des figures 4 et 5 et perpendiculaire au plan commun des axes des cônes et des embouts. Au cours de ce basculement, le profil de la face 8, les axes 25 des orifices 12 et les axes 23 des embouts 20 demeurent dans le plan commun. Ce basculement est effectué de sorte que le premier cône 18 est progressivement extrait de son orifice 12 de portoir, et que le dernier embout 20 se rapproche de son cône 18 jusqu'à pénétrer dans celui-ci et le retenir par friction. Au cours de ce mouvement, tous les embouts intermédiaires 20 de la rangée pénètrent successivement dans leurs cônes 18 respectifs et les retiennent par friction pour les extraire de leur orifice 12. A l'issue de ce mouvement de basculement, en référence à la figure 5, tous les cônes 18 sont retenus par friction sur les embouts 20 et seul le dernier cône 18 de la rangée de cônes associé au dernier embout 20 de la rangée d'embouts est encore reçu comme à l'origine dans son orifice 12. Il suffit alors d'éloigner la pipette 22 par rapport au portoir 2, parallèlement à l'axe des embouts, suivant la flèche 26 de la figure 5. L'introduction progressive de chaque embout 20 dans le cône 18 associé et la fixation par friction de chaque cône individuellement et successivement autorisent l'utilisateur à ne fournir qu'un effort modéré pour la fixation des cônes.

Grâce à la forme convexe dans la direction longitudinale 11, le portoir 2 permet aussi de fixer de la même façon les cônes 18 à des embouts suivant la direction longitudinale 11 du portoir, par exemple si la pipette 22 comporte de neuf à douze embouts, en utilisant l'une quelconque des rangées longitudinales d'orifices 12.

Alternativement, il est possible de fixer les cônes 18 aux embouts 20 de façon simultanée, c'est-à-dire en insérant en même temps tous les embouts 20 de la rangée d'embouts dans les cônes 18 associés de la rangée de cônes et en exerçant sur 1a pipette 22 un unique effort vertical de haut en bas pour la retenue simultanée de tous les cônes sur la pipette. On joue alors notamment sur la déformation élastique de la face supérieure 8.

Bien entendu, on pourra apporter à l'invention de nombreuses modifications sans sortir du cadre de celle-ci.

La face supérieure 8 du support pourra avoir un profil transversal convexe selon une seule direction, les cônes 18 devant alors être fixés aux embouts 20 par rangées parallèles à cette direction. Ainsi, la face supérieure 8 pourra être cylindrique. Le profil pourra être arrondi sans être en arc de cercle.

Les profils pourront être triangulaires en « V » renversé, la face supérieure 8 ayant par exemple une forme en pointe de diamant.

## Revendications

1. Portoir pour cônes de pipette, notamment de pipette multicanaux, le portoir (2) présentant des orifices (12) alignés en formant au moins une rangée suivant au moins une direction d'alignement (11, 13), et une face d'appui (8) adaptée à supporter des cônes (18) reçus dans les orifices (12), le portoir rendant simultanément accessibles des cônes (18) de la rangée, **caractérisé en ce que** la face d'appui (8) a un profil transversal suivant la direction d'alignement (11, 13) de forme générale convexe.

2. Portoir selon la revendication 1, **caractérisé en ce que** les orifices (12) sont alignés suivant deux directions d'alignement (11, 13) non parallèles entre elles, la face d'appui (8) ayant des profils transversaux suivant les deux directions d'alignement de forme convexe.

3. Portoir selon la revendication 1 ou 2, **caractérisé en ce que** les orifices (12) sont alignés en formant au moins deux rangées suivant deux directions d'alignement respectives (11, 13) non parallèles entre elles, le portoir rendant simultanément accessibles des cônes de chaque rangée.

4. Portoir selon l'une quelconque des revendications 1 à 3, **caractérisé en ce que** le profil ou au moins un des profils a une forme arrondie.

5. Portoir selon l'une quelconque des revendications 1 à 4, **caractérisé en ce que** le profil ou au moins un des profils a une forme en arc de cercle.

6. Portoir selon l'une quelconque des revendications 1 à 5, **caractérisé en ce que** la face d'appui (8) a une forme sphérique.

7. Portoir selon l'une quelconque des revendications 1 à 3, **caractérisé en ce que** le profil ou au moins un des profils a une forme triangulaire.

8. Portoir selon l'une quelconque des revendications 1 à 7, **caractérisé en ce que** le portoir est constitué de plusieurs parties (4, 10) sensiblement immobiles les unes par rapport aux autres.

9. Portoir selon l'une quelconque des revendications 1 à 8, **caractérisé en ce que** le portoir est d'un seul tenant.

10. Portoir selon l'une quelconque des revendications 1 à 9, **caractérisé en ce que** le portoir comporte une paroi d'appui (4) définissant la face d'appui (8), et des moyens de support (10) reliés directement à la paroi d'appui (4) et aptes à la supporter en reposant sur une base.

11. Portoir selon l'une quelconque des revendications 1 à 10, **caractérisé en ce que** le portoir a une forme générale de parallélépipède rectangle.

12. Procédé de fixation de cônes sur des embouts d'une pipette multicanaux, **caractérisé en ce que**, à partir d'une pipette (22) comportant au moins un premier et un deuxième embouts (20), et d'un portoir (2) selon l'une des revendications précédentes recevant au moins un premier et un deuxième cônes (18) dans les orifices (12), il comprend les étapes de :
- disposer la pipette (22) par rapport au portoir (2) de sorte que le profil et des axes (23) des embouts s'étendent dans un plan commun, le premier embout (20) pénétrant dans le premier cône (18) afin de retenir le premier cône sur le premier embout, et le deuxième embout (20) s'étendant en regard et à distance du deuxième cône (18); et
- basculer la pipette (22) en conservant le profil et les axes (23) des embouts dans le plan commun de sorte que le premier cône (18) retenu sur le premier embout (20) s'étend à distance de la face d'appui (8), et de sorte que le deuxième embout (20) pénètre dans le deuxième cône (18) afin de retenir le deuxième cône sur le deuxième embout.

13. Procédé de fixation de cônes sur des embouts d'une pipette multicanaux, **caractérisé en ce que**, à partir d'une pipette (22) comportant au moins deux embouts (20), et d'un portoir (2) selon l'une des revendications 1 à 11 recevant au moins deux cônes (18) dans les orifices (12), il comprend les étapes de :
- disposer la pipette (22) par rapport au portoir (2) de sorte que le profil et des axes (23) des embouts s'étendent dans un plan commun, les embouts (20) pénétrant dans les cônes (18) respectifs ; et
- solliciter la pipette (22) en direction du portoir parallèlement aux axes des embouts afin de retenir simultanément les cônes sur les embouts respectifs.

## Claims

1. A rack for pipette cones, in particular for a multichannel pipette, the rack (2) having aligned orifices (12) forming at least one row in at least one alignment direction (11, 13), and a support face (8) adapted to support cones (18) received in the orifices (12), the rack making the cones (18) of the row accessible simultaneously, and being **characterized in that** the support face (8) has a transverse profile in the alignment direction (11, 13) that is generally convex in shape.

2. A rack according to claim 1, **characterized in that** the orifices (12) are aligned in two non-mutual parallel alignment directions (11, 13), the support face (8) having transverse profiles in both alignment directions that are convex in shape.

3. A rack according to claim 1 or 2, **characterized in that** the orifices (12) are aligned so as to form at least two rows in two respective non-mutually parallel alignment directions (11, 13), the rack making the cones in each row accessible simultaneously.

4. A rack according to any one of claims 1 to 3, **characterized in that** the profile or at least one of the profiles, is rounded in shape.

5. A rack according to any one of claims 1 to 4, **characterized in that** the profile, or at least one of the profiles, is in the form of a circular arc.

6. A rack according to any one of claims 1 to 5, **characterized in that** the support face (8) is spherical in shape.

7. A rack according to any one of claims 1 to 3, **characterized in that** the profile, or at least one of the profiles, is triangular in shape.

8. A rack according to any one of claims 1 to 7, **characterized in that** the rack is constituted by a plurality of portions (4, 10) that are substantially unmovable relative to one another.

9. A rack according to any one of claims 1 to 8, **characterized in that** the rack is made as a single piece.

10. A rack according to any one of claims 1 to 9, **characterized in that** the rack has a support wall (4) defining the support face (8), and support means (10) connected directly to the support wall (4) and suitable for supporting it by resting on a base.

11. A rack according to any one of claims 1 to 10, **characterized in that** the general shape of the rack is that of a rectangular parallelepiped.

12. A method of fixing cones on the endpieces of a multichannel pipette, the method being **characterized in that**, starting from a pipette (22) having at least first and second endpieces (20) and a rack (2) according to any preceding claim receiving at least first and second cones (18) in its orifices (12), it comprises the steps of:
· placing the pipette (22) relative to the rack (2) in such a manner that the profile lies in the same plane as the axes (23) of the endpieces, the first endpiece (20) penetrating into the first cone (18) so as to hold the first cone on the first endpiece, and the second endpiece (20) extending in register with and at a distance from the second cone (18); and
· tilting the pipette (22) while keeping the profile in the same plane as the axes (23) of the endpieces so that the first cone (18) held on the first endpiece (20) moves to a distance from the support face (8) and so that the second endpiece (20) penetrate into the second cone (18) so as to hold the second cone on the second endpiece.

13. A method of fixing cones on the endpieces of a multichannel pipette, the method being **characterized in that**, starting from a pipette (22) having at least two endpieces (20) and a rack (2) according to any one of claims 1 to 11, receiving at least two cones (18) in the orifices (12), it comprises the steps of:
· placing the pipette (22) relative to the rack (2) in such a manner that the profile lies in the same plane as the axes (23) of the endpieces, the endpieces (20) penetrating into the respective cones (18); and
· urging the pipette (22) towards the rack parallel to the axes of the endpieces so as to retain the cones simultaneously on the respective endpieces.

## Patentansprüche

1. Träger für Pipettenkegel bzw. -konen, besonders für Mehrkanalpipetten, wobei der Träger (2) fluchtende Öffnungen (12), die mindestens eine Reihe in mindestens einer Fluchtrichtung (11, 13) bilden, und eine Auflagefläche (8) aufweist, die dazu eingerichtet ist, Kegel (18) zu tragen, die in den Öffnungen (12) aufgenommen sind, wobei der Träger Kegel (18) der Reihe gleichzeitig zugänglich macht, **dadurch gekennzeichnet, daß** die Auflagefläche (8) längs der Fluchtrichtung (11, 13) ein Querprofil mit insgesamt konvexer Form aufweist.

2. Träger nach Anspruch 1, **dadurch gekennzeichnet, daß** die Öffnungen (12) in zwei Fluchtrichtungen (11, 13) fluchten, die nicht zueinander parallel sind, wobei die Auflagefläche (8) längs der beiden Fluchtrichtungen ein Querprofil mit konvexer Form aufweist.

3. Träger nach Anspruch 1 oder 2, **dadurch gekennzeichnet, daß** die Öffnungen (12) fluchten, indem sie mindestens zwei Reihen längs zweier Fluchtrichtungen (11, 13) bilden, die zueinander nicht parallel sind, und der Träger die Kegel einer jeden Reihe gleichzeitig zugänglich macht.

4. Träger nach irgendeinem der Ansprüche 1 bis 3, **dadurch gekennzeichnet, daß** das Profil oder mindestens eines der Profile eine abgerundete Form hat.

5. Träger nach irgendeinem der Ansprüche 1 bis 4, **dadurch gekennzeichnet, daß** das Profil oder mindestens eines der Profile eine kreisbogenartige Form hat.

6. Träger nach irgendeinem der Ansprüche 1 bis 5, **dadurch gekennzeichnet, daß** die Auflagefläche (8) eine kugelige Form hat.

7. Träger nach irgendeinem der Ansprüche 1 bis 3, **dadurch gekennzeichnet, daß** das Profil oder mindestens eines der Profile eine dreieckige Form hat.

8. Träger nach irgendeinem der Ansprüche 1 bis 7, **dadurch gekennzeichnet, daß** der Träger aus mehreren Teilen (4, 10) gebildet ist, die im wesentlichen zueinander unbeweglich sind.

9. Träger nach irgendeinem der Ansprüche 1 bis 8, **dadurch gekennzeichnet, daß** der Träger einstückig ist.

10. Träger nach irgendeinem der Ansprüche 1 bis 9, **dadurch gekennzeichnet, daß** der Träger eine Auflagewand (4) aufweist, die die Auflagefläche (8) bildet, sowie Unterstützungsmittel (10), die unmittelbar mit der Auflagewand (4) verbunden sind und dazu eingerichtet sind, diese zu unterstützen, indem sie auf einer Basis ruhen.

11. Träger nach irgendeinem der Ansprüche 1 bis 10, **dadurch gekennzeichnet, daß** der Träger im allgemeinen eine rechteckige Quaderform hat.

12. Verfahren zur Befestigung von Kegeln auf den Ansätzen einer Mehrkanalpipette, **dadurch gekennzeichnet, daß** es, ausgehend von einer Pipette (22), die mindestens einen ersten und einen zweiten Ansatz (20) aufweist, und von einem Träger(2) nach einem der vorhergehenden Ansprüche, der mindestens einen ersten und einen zweiten Kegel (18) in den Öffnungen (12) aufnimmt, die folgenden Schritte aufweist:
- derartiges Anordnen der Pipette (22) in Bezug auf den Träger (2), daß sich das Profil und die Achsen (23) der Ansätze in einer gemeinsamen Ebene erstrecken, wobei der erste Ansatz (20) in den ersten Kegel (18) eindringt, um den ersten Kegel auf dem ersten Ansatz zu halten, und der zweite Ansatz (20) sich gegenüberliegend und in einem Abstand vom zweiten Kegel (18) erstreckt; und
- Schwenken der Pipette (22), indem man das Profil und die Achsen (23) der Ansätze in der gemeinsamen Ebene behält, und zwar derart, daß der erste Kegel (18), der auf dem ersten Ansatz (20) gehalten ist, sich in einem Abstand zur Auflagefläche (8) erstreckt, und derart, daß der zweite Ansatz (20) in den zweiten Kegel (18) eindringt, um den zweiten Kegel auf dem zweiten Ansatz zu halten.

13. Verfahren zur Befestigung von Kegeln auf den Ansätzen einer Mehrkanalpipette, **dadurch gekennzeichnet, daß** es, ausgehend von einer Pipette (22), die mindestens zwei Ansätze aufweist, und von einem Träger (2) nach einem der Ansprüche 1 bis 11, der mindestens zwei Kegel (18) in den Öffnungen (12) aufnimmt, die folgenden Schritte aufweist:
- derartiges Anordnen der Pipette (22) bezüglich des Trägers (2), daß das Profil und die Achsen (23) der Ansätze sich in einer gemeinsamen Ebene erstrecken, wobei die Ansätze (20) in die jeweiligen Kegel (18) eindringen; und
- Belasten der Pipette (22) in Richtung des Träges parallel zu den Achsen der Ansätze, um gleichzeitig die Kegel auf den jeweiligen Ansätzen zu halten.
